**Europäisches Patentamt**

**European Patent Office**

**Office européen des brevets**

(19)

(11) Veröffentlichungsnummer : **0 392 177 B1**

(12)

# EUROPÄISCHE PATENTSCHRIFT

(45) Veröffentlichungstag der Patentschrift :
**09.06.93 Patentblatt 93/23**

(51) Int. Cl.⁵ : **B62D 47/02, B62D 53/08, B60D 5/00**

(21) Anmeldenummer : **90103823.2**

(22) Anmeldetag : **27.02.90**

(54) Gelenkstabilisierungssystem.

(30) Priorität : **14.04.89 DE 3912383**

(43) Veröffentlichungstag der Anmeldung :
**17.10.90 Patentblatt 90/42**

(45) Bekanntmachung des Hinweises auf die
Patenterteilung :
**09.06.93 Patentblatt 93/23**

(84) Benannte Vertragsstaaten :
**AT CH DE FR GB IT LI NL SE**

(56) Entgegenhaltungen :
**DE-A- 3 405 871**
**DE-A- 3 615 071**
**FR-A- 2 541 217**

(73) Patentinhaber : **MAN Nutzfahrzeuge Aktiengesellschaft**
**Dachauer Strasse 667 Postfach 50 06 20**
**W-8000 München 50 (DE)**

(72) Erfinder : **Uttenthaler, Josef, Dipl.-Ing.**
**Aventinusstrasse 1**
**W-8068 Hettenshausen (DE)**

## Beschreibung

Die Erfindung bezieht sich auf eine Gelenkdämpfungsvorrichtung zur Verwendung bei einem Gelenkomnibus mit einem Vorderwagen und einem mit diesem über einen Drehkranz (Drehgelenk) verbundenen Nachläufer, wobei zwischen den beiden Wagenkomponenten wenigstens ein Hydraulikzylinder oder Stoßdämpfer angeordnet ist.

Gelenkomnibusse mit Heckmotor und Antrieb auf der Nachläuferachse - sogenannte gedrückte oder geschobene Systeme - benötigen für den Wintereinsatz eine Knickschutzanlage. Darüber hinaus ist für solche Gelenkbuskonzeptionen wegen besonderer Massenverteilung, insbesondere aber bei höheren Fahrgeschwindigkeiten, aus Stabilitätsgründen eine Dämpfung im Gelenkbereich erforderlich.

Knickwinkelsteuerungen für Gelenkomnibusse in der Form von Knickwinkelsperren oder Knickwinkeldämpfern sind in den manigfaltigsten Ausführungen bekannt. Es soll hier nur auf die drei im wesentlichen in praxi angewandten Systeme eingegangen werden. So ist eine Ausführung (DE-OS 24 20 203) der Knickwinkelsperre mit zwei zwischen Vorderwagen und Nachläufer angeordneten Hydraulikzylindern bekannt, deren Ansteuerung zum Blockieren des Knickgelenks über zwei Potentiometer, einer Elektronik und einem hydraulischen Steuerblock erfolgt und die Sperrung des Knickwinkels aus dem Vergleich Lenkwinkel/Knickwinkel resultiert, wobei u.U. auch noch die Parameter Fahrgeschwindigkeit, Knickwinkelgeschwindigkeit und Knickwinkelbeschleunigung mit einbezogen werden. Eine andere Ausführungsvariante (DE-OS 36 23 655) weist einen am Vorderwagen angebrachten, quer zur Fahrtrichtung liegenden, doppelt wirkenden Hydraulikzylinder auf, an dessen längsverschieblichem Zylindermantel zwei Stahlseile angebracht sind, die, über einen Drehschemel geführt, am Drehkranzteil des Nachläufers befestigt sind. Die Steuerung erfolgt knickwinkelgeschwindigkeitsabhängig über zwei Potentiometer, einer Elektronik und einem hydraulischen Steuerblock. Auch kann manuell auf Konstantdämpfung geschaltet werden.

Der für die bekannten Systeme notwendige hydraulische sowie elektronisch-elektrische Steuerungs- und Überwachungsaufwand ist erheblich. Abgesehen von der Störanfälligkeit in den umfangreich installierten elektrischen Anschlüssen und Bauteilen ist auch eine sehr zeitaufwendige und damit kostenintensive Einstell- und Abgleichprozedur erforderlich, die außerdem nur von geschultem Fachpersonal vorgenommen werden kann. Die Exporttauglichkeit eines solcherart ausgerüsteten Gelenkommibusses ist sehr eingeschränkt. Gefragt sind daher einfache, überschaubare Knickschutzsysteme, die bei Bedarf auch von durchschnittlich qualifiziertem Montagepersonal gewartet oder instandgesetzt werden können.

Es ist eine Gelenkdämpfungsvorrichtung gemäß dem Oberbegriff des Anspruch 1 (DE 27 48 713 A1) bekannt, die ohne elektronische Steuerungselemente auskommt, wobei von der selbsttätigen Anpassung an die Straßenverhältnisse Gebrauch gemacht wird und die zwischen dem Primärwagen und Sekundärwagen angeordneten Zylinder als vorgespannte Dämpferzylinder ausgebildet sind, die stabilisierend auf das Kurvenverhalten des Gelenkzuges wirken.

Der Erfindung liegt die Aufgabe zugrunde, eine einfache Vorrichtung zur Regelung der Knickstabilität in Abhängigkeit vom Dämpfungsmoment über den Knickwinkel unter Verzicht auf eine aufwendige elektronisch-hydraulische Steuerung und Funktionsüberwachung zu schaffen.

Dies wird erfindungsgemäß dadurch erreicht, daß zwischen dem Vorderwagen und dem mit dem Drehkranzaußenring verbundene Nachläufer oder zwischen dem Nachläufer und dem mit dem Drehkranzinnenring verbundenen Vorderwagen in der Längsmittelebene des Gelenkomnibusses ein Hydraulikzylinder oder ein Stoßdämpfer angeordnet ist, der sich in Strecklage des Gelenkomnibusses in seiner inneren Totpunktlage befindet und in Parallelschaltung zu dem Hydraulikzylinder oder dem Stoßdämpfer ein weiterer Hydraulikzylinder oder Stoßdämpfer angeordnet ist, der sich, vorzugsweise in leichter Schräglage, mit Abstand zur Längsmittelebene des Gelenkomnibusses bei Strecklage des Gelenkomnibusses in seiner mittleren Hubstellung befindet, wobei der Hydraulikzylinder oder der Stoßdämpfer einen Endes an der jeweiligen Wagenkomponente und anderen Endes in der Quermittelebene des jeweiligen Drehkranzteils schwenkbar befestigt ist.

Bei ausschließlicher Betrachtung des in der Längsmittelebene des Gelenkbusses angeordneten Hydraulikzylinders oder Stoßdämpfers ist der Hub und damit auch das Dämpfungsmoment des Hydraulikzylinders oder Stoßdämpfers abhängig vom Knickwinkel zwischen Vorderwagen und Nachläufer, und zwar mit der Tendenz, daß bei Geradeausfahrt das Moment 0 vorliegt, bei kleineren Abweichungen von der Geradeausfahrt kleine Dämpfungsmomente anliegen und mit zunehmendem Knickwinkel die Dämpfungsmomente gemäß einer zunächst degressiven, dann in eine progressive Kurve übergehend, exponential anwachsen, so daß den Erfordernissen der Praxis, nämlich der mit zunehmendem Knickwinkel wachsenden Gefahr der klappmesserartigen Einknickung der Wagenkomponenten unter Anwendung einfachster Mittel optimal entgegengewirkt wird. Die Momentenkurve bei Druck auf den Zylinderkolben oder Dämpferkolben verläuft wesentlich flacher als bei Zug, d.h., dem Einfahren in die Kurve wird mehr Widerstand entgegengesetzt als dem Ausfahren (Streckung des Gelenkzuges).

Bei ausschließlicher Betrachtung des mit Abstand zur Längsmittelebene angeordneten Hydraulikzylinders oder Stoßdämpfers ist auch bei Geradeausfahrt ein beträchtliches Moment vorhanden, so daß auch schon in der Strecklage eine das Schlingern verhindernde Dämpfung vorhanden ist. Durch die Kombination des in der Längsmittelebene und des im Abstand zu der Längsmittelebene angeordneten Zylinders in Parallelschaltung wird eine Charakteristik des Dämpfungsmomentes erzielt, die sich aus der Überlagerung der Dämpfungsmomente der einzelnen Zylinder ergibt, d.h., es steht schon bei der Strecklage ein Dämpfungsmoment zur Verfügung, das dann in einen progressiven Dämpfungsverlauf übergeht. Somit sind auch Situationen bei schwierigem Anfahren aus der Parkbucht, insbesondere aber eisglatten Straßenverhältnissen gut beherrschbar. Mittels der erfinderischen Anordnung wird auf wirtschaftlichste Art und Weise eine allen Straßen- und Fahrverhältnissen gerechtwerdende optimale Dämpfung erzielt.

Der erfinderische Knickgelenkschutz funktioniert grundsätzlich mit je einem Hydraulikzylinder oder Stoßdämpfer. Das ist die billigste Lösung. Es können aber auch nach Anspruch 2 je zwei Hydraulikzylinder oder je zwei Stoßdämpfer mit unterschiedlicher Zweckstellung eingesetzt werden, nämlich um aus Raumgründen mit schlankeren Zylindern arbeiten zu können oder aber bei nicht reduzierten Zylinderdurchmessern ein redundantes System zu schaffen, das auch im Schadensfall eine Funktionsbeeinträchtigung des Fahrbetriebes ausschließt.

Nach einem Merkmal der Erfindung ist in der Verbindungsleitung zwischen den Anschlüssen der Verdrängungsräume des Hydraulikzylinders ein einstellbares Drosselventil angeordnet. Solcherart kann das Dämpfungsmoment modifiziert werden und gegebenenfalls den geographischen und jahreszeitlichen Streckenbedingungen angepaßt werden. Es kann auch in der Verbindungsleitung zwischen den Anschlüssen des Hydraulikzylinders jedem Anschluß je ein einstellbares Drosselventil zugeordnet sein, wobei der jeweils andere Anschluß über Rückschlagventile gesperrt ist.

Nach einem anderen Merkmal der Erfindung ist vorgesehen, daß in einer Leitung mehrere parallelgeschaltete Drosselventile unterschiedlichen Drosselquerschnitts angeordnet sind, wobei die unterschiedlichen Drosselventile auf unterschiedliche Knickwinkelbereiche umschaltbar sind. Auf diese Weise können besonders gefährdete Knickwinkelbereiche deutlicher abgegrenzt werden.

Indem ein Absperrventil in den hydraulischen Kreislauf eingesetzt wird, ergibt sich eine Konstantdämpfung, die beliebig hoch angesetzt sein kann und die sich durch die Zuordnung eines Überdruckventiles ergibt. Diese höhere Konstantdämpfung kann sich als notwendig erweisen, z.B. beim Ausfahren aus Parkbuchten oder bei plötzlich auftretenden gefährlichen Straßenverhältnissen, z.B. auf eisglatter Straße. Die Einschaltung der Konstantdämpfung kann sowohl aus dem subjektiven Empfinden des Fahrers über Tastendruck erfolgen als auch objektiv von einem ABS/ASR-System eingesteuert werden.

Gemäß einer alternativen Lösung zum Einsatz von Hydraulikzylindern können auch Stoßdämpfer mit über den Hubweg unterschiedlicher Dämpfercharakteristik zur Anwendung kommen, wobei im mittleren Hubbereich eine oder mehrere Nuten in der Zylinderwand zur Erzielung einer geringeren Dämpfung angeordnet sind, so daß der Bereich um die Strecklage des Gelenkzuges schnellere Manövrierbewegungen zuläßt.

Die Erfindung ist in einem Ausführungsbeispiel dargestellt und beschrieben.

Es zeigen:

Fig. 1 eine Gelenkdämpfungsvorrichtung in der Draufsicht,
Fig. 2 eine Gelenkdämpfungsvorrichtung in Seitenansicht und Teilschnitt,
Fig. 3 eine Alternative eines Gelenkdämpfungsvorrichtung in der Draufsicht,
Fig. 4 eine Alternative eines Gelenkdämpfungsvorrichtung in Seitenansicht und Teilschnitt,
Fig. 5 die erfindungsgemäße Gelenkdämpfungsvorrichtung in der Draufsicht,
Fig. 6 die erfindungsgemäße Gelenkdämpfungsvorrichtung in Seitenansicht und Teilschnitt,
Fig. 7 eine schematische Darstellung eines Gelenkomnibusses
Fig. 8 ein Kräftedreieck zum Drehgelenk,
Fig. 9 ein Diagramm mit $F_Q$ über KW,
Fig. 10 ein Diagramm Zylinderhub und Kolbengeschwindigkeit über Knickwinkel (zu Fig. 1 und 2),
Fig. 11 ein Diagramm Stabilisierungsmoment um die Hochachse über dem Knickwinkel (zu Fig. 1 und 2),
Fig. 12 ein Diagramm Zylinderhub und Kolbengeschwindigkeit über dem Knickwinkel (zu Fig. 3 und 4),
Fig. 13 ein Diagramm Stabilisierungsmoment um die Hochachse über dem Knickwinkel (zu Fig. 3 und 4),
Fig. 14 ein Diagramm Stabilisierungsmoment um die Hochachse über dem Knickwinkel (zu Fig. 5 und 6),
Fig. 15 Hydraulikschaltplan.

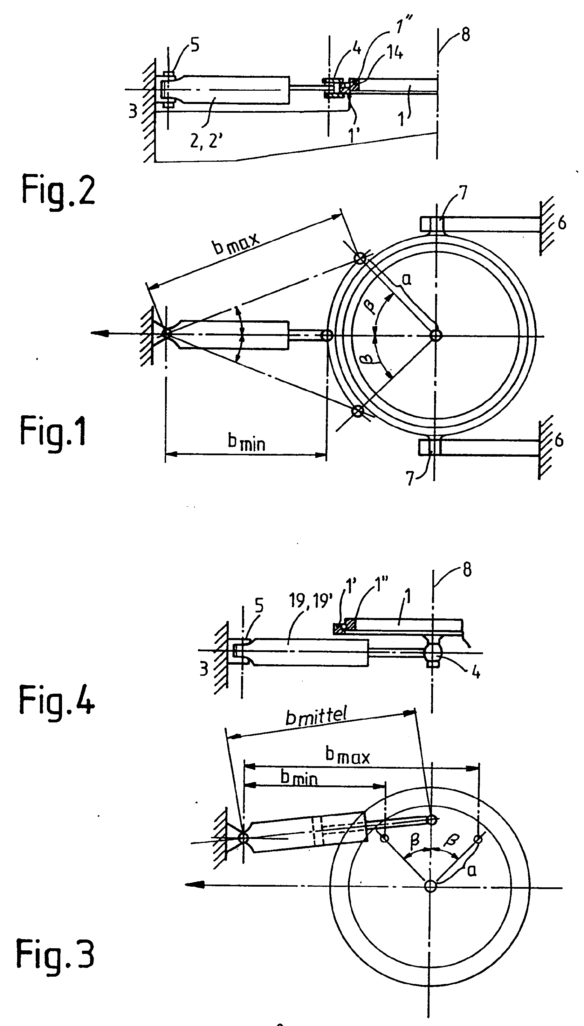

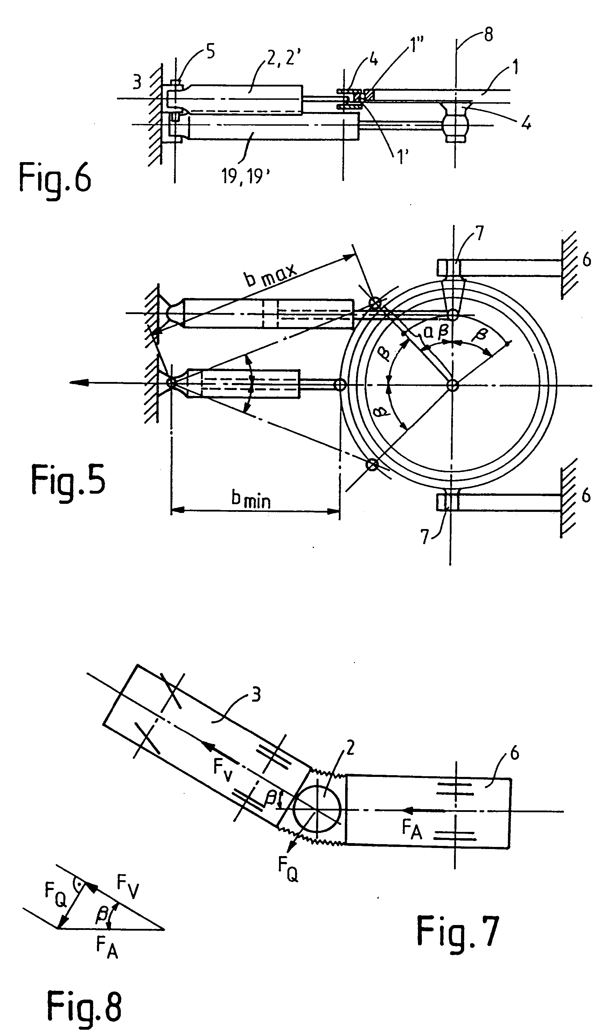

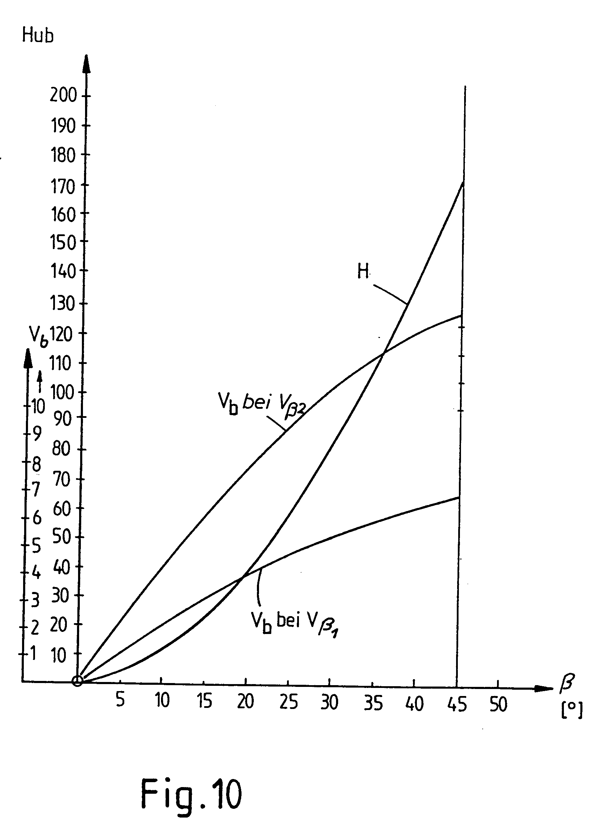

Die eigentliche Erfindung ist in den Fig. 5 und 6 gezeigt. Die Fig. 1 bis 4 und ihre begleitenden Diagramme dienen dem Verständnis der Erfindung, indem sie Problem und Lösung konturieren.

Fig. 1 zeigt eine Gelenkdämpfungsvorrichtung an einem Gelenkomnibus, wobei der Vorderwagen 3 mit dem Nachläufer 6 über einen Drehkranz 1 verbunden ist. Zwischen dem Vorderwagen 3 und dem über Drehgelenke 7 mit dem Nachläufer 6 verbundenen Drehkranzaußenring 1' ist in der Längsmittelebene des Fahr-

3

zeuges ein Hydraulikzylinder 2 oder Stoßdämpfer 2' angeordnet, der über Dreh- oder Kugelgelenk 4 am Drehkranzaußenring 1' und über Dreh- oder Kugelgelenk 5 am Vorderwagen 3 angebunden ist. Bei Geradeausfahrt, d.h., im gestreckten Zustand des Vorderwagens 3 und Nachläufers 6 nimmt der Hydraulikzylinder 2 oder Stoßdämpfer 3 seine innere Totlage ein, d.h., Kolbenhub, Dämpfungskraft und Dämpfungsmoment sind gleich 0.

Mit zunehmendem Knickwinkel $\beta$ vergrößert sich die aus Antriebskraft $F_A$ und Knickwinkel $\beta$ resultierende Querkraft $F_Q$ gemäß $F_Q = F_A \sin \beta$ (siehe Fig. 7, 8 und 9). Aus der Fig. 10 ist der Hubverlauf (H) sowie der Verlauf der Hubgeschwindigkeit $V_b$ bei zwei verschiedenen Konstanten Knickwinkelgeschwindigkeiten zu ersehen, wobei

$$V_b = \frac{\frac{\pi}{180} \cdot (a + b) \cdot a \sin \beta}{\sqrt{2a^2 + 2ab_{min} + b^2 min - 2(a + b_{min}) a \cdot \cos \beta}}$$

$$H = b_x - b_{min} = \sqrt{\{[(a + b) - (\cos\beta) \cdot a]^2 + [(\sin\beta) \cdot a]^2\}} - b_{min}$$

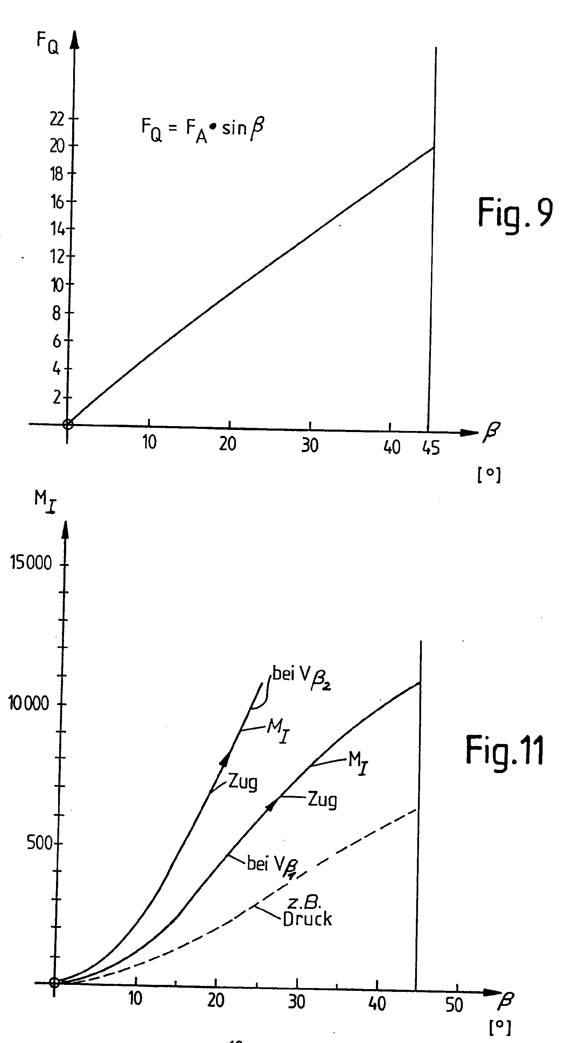

Fig. 11 zeigt das Dämpfungsmoment M bei zwei verschiedenen Konstanten Knickwinkelgeschwindigkeiten unter Zugrundelegung einer Kraft FA = 30.000 N, wobei

$$M = \frac{F \cdot a \cdot \sin\beta \, (a + b_{min}) \, f}{\sqrt{[(a + b_{min}) - (\cos\beta) \cdot a]^2 + (a \cdot \sin\beta)^2}} \quad \text{wobei } f = \frac{Vx}{Vmax}$$

Die Fig. 3 und 4 zeigen eine andere Gelenkdämpfungsvorrichtung eines Gelenkomnibusses, wobei der Vorderwagen 3 mit dem Nachläufer 6 über einen Drehkranz 1 verbunden ist. Zwischen dem Vorderwagen 3 und dem über Drehgelenke 7 mit dem Nachläufer 6 verbundenen Drehkranzaußenring 1' ist ein Hydraulikzylinder 19 oder Stoßdämpfer 19' derart angeordnet, daß er einenendes über ein Dreh- oder Kugelgelenk 5 schwenkbar am Vorderwagen 3 und anderenendes über ein Dreh- oder Kugelgelenk 4 mit dem Drehkranzaußenteil 1', unterhalb des Drehkranzes in Quermittelebene angebracht, verbunden ist, wobei der Zylinder 19 oder der Stoßdämpfer 19' im Abstand, vorzugsweise in leichter Schräglage, zur Längsmittelebene des Fahrzeuges angeordnet ist und der Hydraulikzylinder 19 oder Stoßdämpfer 19' sich bei Strecklage des Fahrzeuges in der mittleren Hubstellung befindet.

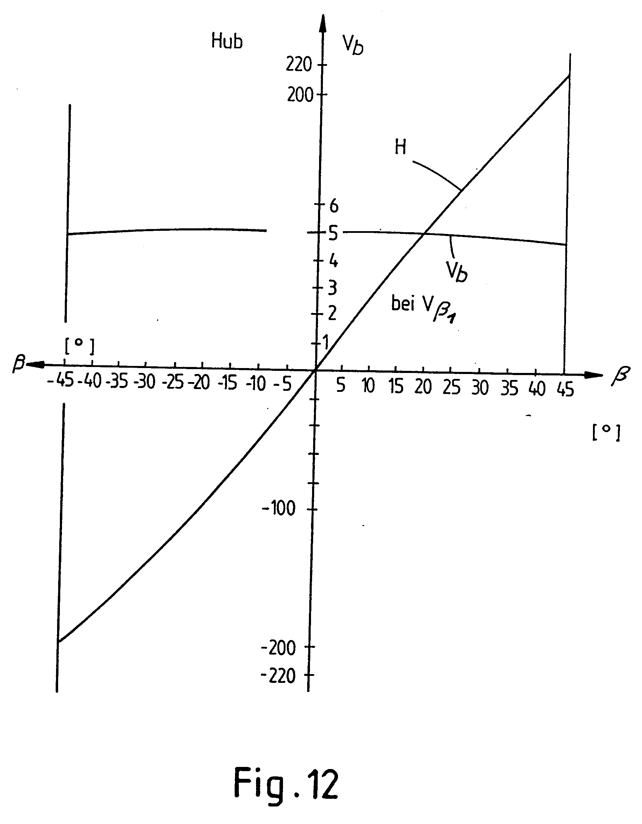

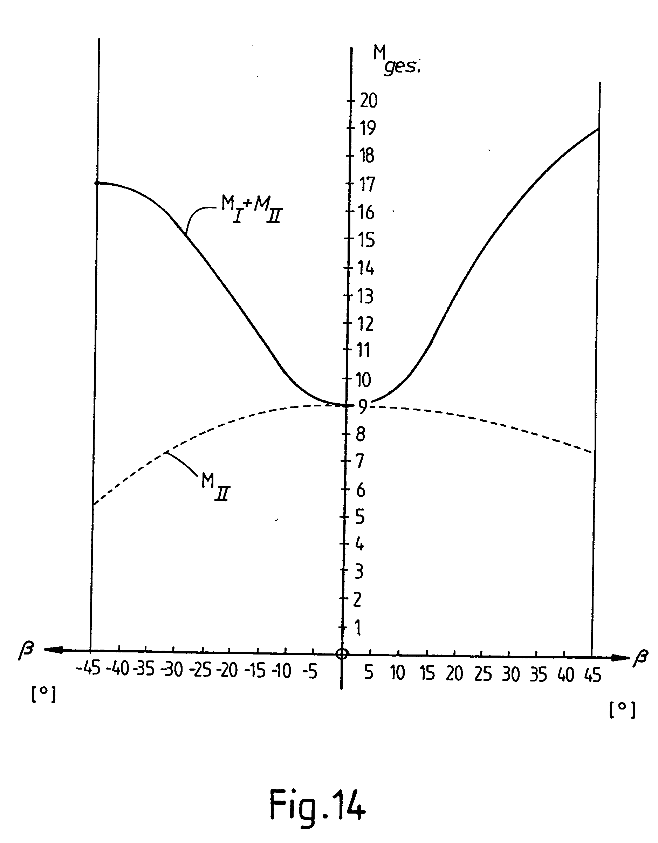

Gemäß Fig. 12 sind Kolbenhub H und Kolbengeschwindigkeit $V_b$ über dem Knickwinkel $\beta$ aufgetragen, wobei sich bei Strecklage des Gelenkzuges der Zylinder- oder Dämpferkolben in seiner mittleren Hubstellung befindet. Die Kolbengeschwindigkeit geht dabei nicht durch 0 und ist annähernd eine Gerade, wobei

$$H = bx - bmittel = \sqrt{(b_{mittel} + a \cdot \sin\beta)^2 + (a - a \cdot \cos\beta)^2} - b_{mittel}$$

$$V_b = \frac{\Delta \, Hub}{\Delta \, \beta} \cdot V_\beta$$

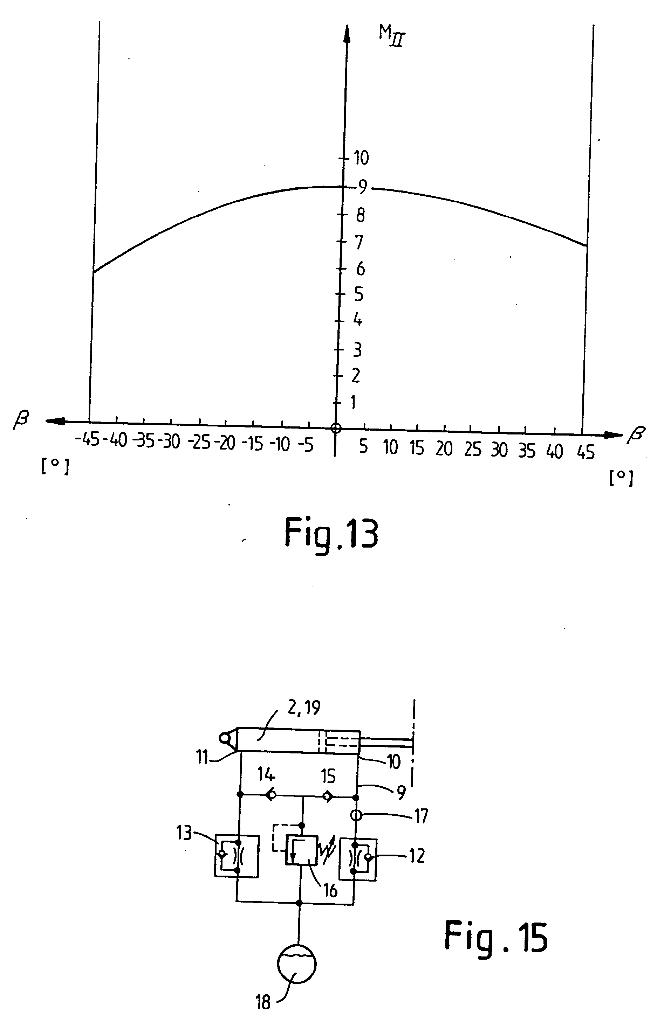

Aus Fig. 13 ist das entsprechende Dämpfungsmoment M zu ersehen.

$$M = F \cdot \sqrt{a^2 + b^2_{mittel}} \cdot \sin\left[ arc \, tg \left( \frac{a}{b_{mittel}} - \frac{a - a \cdot \cos\beta}{b_{mittel} + a \cdot \sin\beta} \beta \right) \right]$$

Die Fig. 5 und 6 zeigen die erfindungsgemäße Gelenkdämpfungsvorrichtung an einem Gelenkomnibus, die eine Kombination der Systeme nach den Fig. 1, 2 und 3, 4 darstellt. Hierbei wird ein Hydraulikzylinder 2 oder Stoßdämpfer 2' in seiner speziellen Anordnung mit einem Hydraulikzylinder 19 oder Stoßdämpfer 19' in seiner speziellen Anordnung parallel geschaltet, so daß eine Dämpfungsmomentcharakteristik gemäß der Fig. 14 erzielt wird, wobei das Dämpfungsmoment schon in der Strecklage des Fahrzeuges einen gewissen Betrag aufweist und später in einen progressiven Kurvenverlauf übergeht, der den höheren Dämpfungsanforderungen bei steigendem Knickwinkel gerecht wird.

Die Kurve gemäß Fig. 14 resultiert aus einer Überlagerung der Kurven aus den Fig. 11 und 13.

Selbstverständlich kann der Verlauf des Stabilisierungsmomentes durch Verändern der Drosselquerschnitte oder der Anlenkpunkte des Hydraulikzylinders 19 oder des Stoßdämpfers 19' derart verändert werden, daß beiderseits der Ordinate die Kurvenäste symmetrisch verlaufen.

In der Anordnung des Stabilisierungsgelenkes gemäß den Fig. 5 und 6 mit dem dazugehörigen Verlauf des Dämpfungsmomentes nach Fig. 14 ist die praxisgerechte Optimierung des erfinderischen Systems zu sehen, indem nämlich schon in der Strecklage des Gelenkzuges beim Ausknicken ein gewisses Dämpfungsmoment aufgebaut ist, das einem "Schwänzeln" des Fahrzeuges entgegenwirkt und bei größerem Knickwinkel adäquat dem Ausknickrisiko das Dämpfungsmoment progressiv zunimmt.

Die Fig. 15 zeigt einen Hydraulikschaltplan mit einem Zylinder 2, 19, der an seinen Enden Anschlüsse 10

EP 0 392 177 B1

und 11 aufweist, die durch eine Leitung 9 verbunden sind. Im weiteren Verlauf der Leitung 9 sind auf parallelen Verbindungssträngen verstellbare Drosselventile 12 und 13 angeordnet. Jeweils ein Strang ist beaufschlagbar, da zwischen den Strängen gegeneinandergeschaltete Absperrventile 14, 15 eingebaut sind, zwischen denen eine Leitung verläuft, in der ein Überdruckventil 16 eingebaut ist. Zum Ausgleich von Leckverlusten und unterschiedlichen Hubvolumina ist im System ein Druckspeicher 18 eingebaut. Bei Anordnung eines Drosselventiles, z.B. 12 kann dieses zur Modifizierung des Dämpfungsmomentes benutzt werden, während bei Anordnung von zwei Drosseln 12 und 13 diese sowohl zur Modifizierung des Dämpfungsmomentes dienen können, gleichwohl aber auch die Aufgabe haben, bei einer Ausführung des Gelenkstabilisierungssystems nach den Fig. 3 und 4 sowie 5 und 6 auf einen Ausgleich zwischen den unterschiedlichen Kolbenflächen eingestellt zu werden. Mit Hilfe des Absperrventiles 17 kann eine in verschiedenen Situationen wünschenswerte Konstantdämpfung eingeschaltet werden, deren Betrag sich über das Druckbegrenzungsventil 16 einstellen läßt. Die Zuschaltung des Absperrventiles 17 kann in der Gefahrensituation vom Fahrer per Hand über eine entsprechende Drucktaste erfolgen oder automatisch durch ein ABS/ASR-System eingesteuert werden.

Die vorstehend dargestellten Ausführungsarten sind als Einzelanordnung beschrieben, sie können aber auch wie in den Ansprüchen dargestellt, als redundantes System ausgeführt werden, wobei man dann entweder den Vorteil von schlankeren Zylindern hat oder eben ein redundantes System erhält, das während des Fahrbetriebes nicht ausfallen kann.

Bezugszeichenliste

| | |
|---|---|
| 1 | Drehkranz |
| 1' | Drehkranzaußenring |
| 1" | Drehkranzinnenring |
| 2 | Hydraulikzylinder |
| 2' | Stoßdämpfer |
| 3 | Vorderwagen |
| 4 | Dreh- oder Kugelgelenk am Drehkranz |
| 5 | Dreh- oder Kugelgelenk am Fahrzeug |
| 6 | Nachläufer |
| 7 | Drehgelenke |
| 8 | Drehgelenkmitte |
| 9 | Verbindungsleitung |
| 10 | Anschluß von 2, 19 |
| 11 | Anschluß von 2, 19 |
| 12 | Drosselventil |
| 13 | Drosselventil |
| 14 | Rückschlagventil |
| 15 | Rückschlagventil |
| 16 | Überdruckventil |
| 17 | Absperrventil |
| 18 | Druckspeicher |
| 19 | Hydraulikzylinder |
| 19' | Stoßdämpfer |
| B | Knickwinkel |
| a | Radius (Kolbenanlenkpunkt-Drehkranzmitte) |
| $H = b_x - b_{min}$ | Kolbenhub bzw. $H = b_x - b_{mittel}$ |
| $F_A$ | Antriebskraft |
| $F_V$ | Schubkraft am Vorderwagen |
| $F_Q$ | Querkraft |
| $V_b$ | Kolbenhubgeschwindigkeit |
| M | Stabilisierungsmoment um die Hochachse |
| f | Dämpfungsfaktor |
| $V_\beta$ | Knickwinkelgeschwindigkeit |

**Patentansprüche**

1.    Gelenkdämpfungsvorrichtung zur Verwendung bei einem Gelenkomnibus mit einem Vorderwagen (3) und

5

einem mit diesem über einen Drehkranz (1) verbundenen Nachläufer (6), wobei zwischen den beiden Wagenkomponenten (3,6) wenigstens ein Hydraulikzylinder oder Stoßdämpfer angeordnet ist, dadurch gekennzeichnet, daß zwischen dem Vorderwagen (3) und dem mit dem Drehkranzaußenring (1') verbundene Nachläufer (6) oder zwischen dem Nachläufer (6) und den mit dem Drehkranzinnenring (1") verbundenen Vorderwagen (3) in der Längsmittelebene des Gelenkomnibusses ein Hydraulikzylinder (2) oder ein Stoßdämpfer (2') angeordnet ist, der sich in Strecklage des Gelenkomnibusses in seiner inneren Totpunktlage befindet und in Parallelschaltung zu dem Hydraulikzylinder (2) oder dem Stoßdämpfer (2') ein weiterer Hydraulikzylinder (19) oder Stoßdämpfer (19') angeordnet ist, der sich, vorzugsweise in leichter Schräglage, mit Abstand zur Längsmittelebene des Gelenkomnibusses bei Strecklage des Gelenkomnibusses in seiner mittleren Hubstellung befindet, wobei der Hydraulikzylinder (19) oder der Stoßdämpfer (19') einen Endes an der jeweiligen Wagenkomponente (3, 6) und anderen Endes in der Quermittelebene des jeweiligen Drehkranzteils (1', 1") schwenkbar befestigt ist.

2. Gelenkdämpfungsvorrichtung nach Anspruch 1, dadurch gekennzeichnet, daß je ein Hydraulikzylinder (2) oder Stoßdämpfer (2') zwischen dem Vorderwagen (3) und dem damit korrespondierenden Drehkranzteil sowie zwischen dem Nachläufer (6) und dem damit korrespondierenden Drehkranzteil derart in der Längsmittelebene des Gelenkomnibusses angeordnet sind, daß sie sich bei Strecklage des Gelenkomnibusses in ihrer inneren Totpunktlage befinden und in hydraulischer Parallelschaltung zu ihnen je ein weiterer Hydraulikzylinder (19) oder Stoßdämpfer (19'), vorzugsweise in leichter Schräglage, mit Abstand zur Längsmittelebene des Gelenkomnibusses, sich bei Strecklage des Gelenkomnibusses in seiner mittleren Hubstellung befindend, angeordnet ist, wobei die Hydraulikzylinder (19) oder die Stoßdämpfer (19') einen Endes an der jeweiligen Wagenkomponente (3, 6) und anderen Endes in der Quermittelebene des jeweiligen Drehkranzteils (1', 1") schwenkbar befestigt sind.

3. Gelenkdämpfungsvorrichtung nach Anspruch 1 oder 2, dadurch gekennzeichnet, daß in der Verbindungsleitung (9) zwischen den Anschlüssen (10, 11) der Verdrängungsräume des Hydraulikzylinders (2, 19) ein einstellbares Drosselventil (12) angeordnet ist.

4. Gelenkdämpfungsvorrichtung nach Patentanspruch 1 bis 3, dadurch gekennzeichnet, daß in der Verbindungsleitung (9) zwischen den Anschlüssen (10, 11) des Hydraulikzylinders (2, 19) jedem Anschluß (10, 11) je ein einstellbares Drosselventil (12, 13) zugeordnet ist, wobei der jeweils andere Anschluß über ein Rückschlagventil (14, 15) gesperrt ist.

5. Gelenkdämpfungsvorrichtung nach einem oder mehreren der Ansprüche 1 bis 4, dadurch gekennzeichnet, daß in einer Leitung (9) mehrere parallel geschaltete Drosselventile (12, 13) unterschiedlichen Drosselquerschnitts angeordnet sind, wobei die unterschiedlichen Drosselventile auf unterschiedliche Knickwinkelbereiche umschaltbar sind.

6. Gelenkdämpfungsvorrichtung nach einem oder mehreren der Ansprüche 1 bis 5, dadurch gekennzeichnet, daß in der Verbindungsleitung (9) zwischen den Zylinderanschlüssen (10, 11) ein Absperrventil (17) angeordnet ist, welches in seiner Sperrstellung den Abfluß des Verdrängungsvolumens über die Drosselventile verhindert, wodurch eine Konstantdämpfung über den gesamten Knickwinkelbereich erreicht wird.

7. Gelenkdämpfungsvorrichtung nach Anspruch 6, dadurch gekennzeichnet, daß das Absperrventil (17) automatisch über ABS-ASR einschaltbar ist.

8. Gelenkdämpfungsvorrichtung nach einem oder mehreren der Ansprüche 1 bis 7, dadurch gekennzeichnet, daß beim Einsatz von Stoßdämpfern (2', 19') an sich bekannte Stoßdämpfer mit über den Hubweg unterschiedlicher Dämpfungscharakteristik eingesetzt sind.

9. Gelenkdämpfungsvorrichtung nach einem oder mehreren der Ansprüche 1 bis 8, dadurch gekennzeichnet, daß beim Einsatz von Stoßdämpfern (19') diese in an sich bekannter Weise in einem oder mehreren Hubbereichen eine oder mehrere Nuten zur Erzielung einer geringeren Dämpfung aufweisen.

**Claims**

1. An articulated damping device for use in an articulated bus having a leading carriage (3), and a trailing carriage (6) connected thereto by means of a swivelling joint (1), at least one hydraulic cylinder or damper being arranged between the two carriages (3, 6), **characterised in that** a hydraulic cylinder (2) or a damper (2'), located at its inner dead centre position when the articulated bus is in its straight position, is arranged between the leading carriage (3) and the trailing carriage (6) connected to the outer ring (1') of the swivelling joint or between the trailing carriage (6) and the leading carriage (3) connected to the inner ring (1") of the swivelling joint in the longitudinal median plane of the articulated bus, and a further hydraulic cylinder (19) or damper (19') is arranged in parallel with the hydraulic cylinder (2) or the damper (2') and is located in its central stroke position, preferably slightly tilted, and at a distance from the longitudinal median plane of the articulated bus when the articulated bus is in its straight position, wherein the hydraulic cylinder (19) or damper (19') is attached in a pivotable manner at one end to the respective carriage (3, 6) and at the other end in the transverse median plane of the respective swivelling joint component (1, 1', 1").

2. An articulated damping device according to claim 1, **characterised in that** a respective hydraulic cylinder (2) or damper (2') is arranged between the leading carriage (3) and its corresponding swivelling joint component, and also between the trailing carriage (6) and its corresponding swivelling joint component in the longitudinal median plane of the articulated bus in such a way that it is located at its inner dead centre position when the articulated bus is in its straight position, and a further hydraulic cylinder (19) or damper (19') is arranged hydraulically in parallel therewith, preferably slightly tilted, and at a distance from the longitudinal median plane of the articulated bus, and is located in its central stroke position when the articulated bus is in its straight position, wherein the hydraulic cylinder (19) or damper (19') is attached in a pivotable manner at one end to the respective carriage (3, 6) and at the other end in the transverse median plane of the respective swivelling joint component (1, 1', 1").

3. An articulated damping device according to claim 1 or 2, **characterised in that** an adjustable throttle valve (12) is arranged in the connection duct (9) between the points of attachment (10, 11) of the displacement areas of the hydraulic cylinder (2, 19).

4. An articulated damping device according to claims 1 to 3, **characterised in that** in the connection duct (9) between the connection points (10, 11) of the hydraulic cylinder (2, 19), an adjustable throttle valve (12, 13) is allocated to each connection point (10, 11), and the other connection point respectively is blocked by a check valve (14, 15).

5. An articulated damping device according to one or more of claims 1 to 4, **characterised in that** a plurality of parallel-connected throttle valves (12, 13) of different throttle cross-section are arranged in a duct (9) and the different throttle valves can be adjusted to different ranges of the turning angle.

6. An articulated damping device according to one or more of claims 1 to 5, **characterised in that** a shut-off valve (17) is arranged in the connection duct (9) between the cylinder connections (10, 11) and in its locked position prevents the displacement volume from being drained via the throttle valves and thus achieves a constant damping over the entire turning angle range.

7. An articulated damping device according to claim 6, **characterised in that** the shut-off valve (17) can be automatically switched on by an anti-lock system or automatic slip control.

8. An articulated damping device according to one or more of claims 1 to 7, **characterised in that** when dampers (2', 19') are used, known dampers with damping characteristics differing over the stroke path are used.

9. An articulated damping device according to one or more of claims 1 to 8, **characterised in that** when dampers (19') are used, they have one or more grooves on one or more stroke areas in a known manner, in order to achieve less damping.

**Revendications**

1. Dispositif amortisseur pour application à un autobus articulé avec une voiture avant (3) et une remorque (6) reliée à celle-ci par une couronne de pivotement (1), dans lequel est disposé entre la voiture avant et la remorque (3,6) au moins un vérin ou un amortisseur hydraulique, dispositif caractérisé en ce qu'entre la voiture avant (3) et la remorque (6) reliée à l'anneau extérieur de la couronne de pivotement (1') ou entre la remorque (6) et la voiture avant (3) reliée à l'anneau intérieur de la couronne de pivotement (1") on dispose dans le plan médian longitudinal de l'autobus articulé, un vérin (20) ou un amortisseur (2') hydraulique, qui se trouve dans sa position de point mort intérieure quand l'autobus articulé est en extension et on dispose en parallèle au vérin (2) ou à l'amortisseur (2') un autre vérin (19) ou amortisseur (19') hydraulique, qui se trouve, de préférence dans une position légèrement oblique, à une certaine distance du plan médian longitudinal de l'autobus articulé quand celui-ci est en extension, à sa position de milieu de course, le vérin (19) ou l'amortisseur (19') hydraulique étant fixé de façon à pouvoir pivoter par une extrémité à la voiture ou la remorque correspondante (3, 6) et par l'autre extrémité dans le plan médian transversal de la partie correspondante de couronne de pivotement (1', 1").

2. Dispositif amortisseur selon la revendication 1, caractérisé en ce que l'on dispose respectivement un vérin (2) ou un amortisseur (2') hydraulique entre la voiture avant (3) et la partie correspondant à celle-ci de la couronne de pivotement ainsi qu'entre la remorque (6) et la partie correspondant à celle-ci de la couronne de pivotement dans le plan médian longitudinal de l'autobus articulé, de telle façon qu'ils se trouvent quand l'autobus articulé est en extension dans leur position intérieure de point mort et l'on dispose dans un montage hydrauliquement parallèle à eux respectivement un autre vérin (19) ou amortisseur (19') hydraulique, de préférence dans une position légèrement oblique, à une certaine distance par rapport au plan médian longitudinal de l'autobus articulé, vérin ou amortisseur qui se trouvent quand l'autobus articulé est en extension dans leur position de milieu de course, le vérin (19) ou l'amortisseur (19') étant fixé de façon à pouvoir pivoter à une extrémité à la voiture ou remorque correspondante (3,6) et à l'autre extrémité dans le plan médian transversal de la partie correspondante (1', 1") de la couronne de pivotement.

3. Dispositif amortisseur d'articulation selon la revendication 1 ou 2, caractérisé en ce que dans la conduite de liaison (9) entre les raccords (10, 11) des chambres de compression du vérin hydraulique (2, 19) est disposé un clapet d'étranglement réglable (12).

4. Dispositif amortisseur d'articulation selon la revendication 1 à 3, caractérisé en ce que dans la conduite de liaison (9) entre les raccords (10, 11) du vérin hydraulique (2, 19) un clapet d'étranglement (12, 13) réglable est associé à chaque raccord (10, 11), l'autre raccord étant fermé par un clapet de non retour (14, 15).

5. Dispositif amortisseur d'articulation selon une ou plusieurs des revendications 1 à 4, caractérisé en ce que dans une conduite (9) sont disposés plusieurs clapets d'étranglement (12, 13) montés en parallèle, les différents clapets d'étranglement pouvant être commutés sur différentes plages angulaires de flambage.

6. Dispositif amortisseur d'articulation selon une ou plusieurs des revendications 1 à 5, caractérisé en ce que, dans la conduite de liaison (9) entre les raccords (10, 11) de vérins est disposé une soupape d'arrêt (17) qui empêche dans sa position d'arrêt l'écoulement du volume de compression par l'intermédiaire des clapets d'étranglement, un amortissement constant étant obtenu sur toute la plage angulaire de flambage.

7. Dispositif amortisseur d'articulation selon la revendication 6, caractérisé en ce que la soupape d'arrêt (17) peut être actionnée automatiquement par un système ABS-ASR.

8. Dispositif amortisseur d'articulation selon une ou plusieurs des revendications 1 à 7, caractérisé en ce que lors du montage des amortisseurs (2', 19') on monte des amortisseurs connus en soi avec des caractéristiques d'amortissement différents en fonction de la course.

9. Dispositif amortisseur d'articulation selon une ou plusieurs des revendications 1 à 8, caractérisé en ce que lors du montage des amortisseurs (19') ceux-ci présentent d'une manière connue en soi une ou plusieurs rainures dans une ou plusieurs zones de la course pour obtenir un amortissement plus faible.

Fig.2

Fig.1

Fig.4

Fig.3

Fig.6

Fig.5

Fig.7

Fig.8

Fig.10

$$F_Q = F_A \cdot \sin \beta$$

Fig. 9

bei V$\beta_2$

$M_I$

Zug

$M_I$

Zug

bei V$\beta_1$

z.B.
Druck

Fig. 11

Fig.12

Fig.14

Fig.13

Fig.15